**Europäisches Patentamt**

(19) **European Patent Office**

**Office européen des brevets**

(11) Veröffentlichungsnummer: **0 012 456**
**B1**

(12) ## EUROPÄISCHE PATENTSCHRIFT

(45) Veröffentlichungstag der Patentschrift:
**23.02.83**

(51) Int. Cl.³: **C 10 K 1/04,** C 10 K 1/06,
C 10 J 3/84

(21) Anmeldenummer: **79200620.7**

(22) Anmeldetag: **25.10.79**

(54) **Verfahren zum Behandeln von unter Druck stehendem Kondensat.**

(30) Priorität: **14.12.78 DE 2853989**

(43) Veröffentlichungstag der Anmeldung:
**25.06.80 Patentblatt 80/13**

(45) Bekanntmachung des Hinweises auf die Patenterteilung:
**23.02.83 Patentblatt 83/8**

(84) Benannte Vertragsstaaten:
**BE DE FR GB NL**

(56) Entgegenhaltungen:
**keine**

(73) Patentinhaber: **METALLGESELLSCHAFT AG,**
**Reuterweg 14 Postfach 3724, D-6000 Frankfurt/M.1 (DE)**

(72) Erfinder: **Rudolph, Paul, Dipl.-Ing., Friedrichsdorfer**
**Strasse 17, D-6380 Bad Homburg (DE)**
Erfinder: **Becker, Paul Dieter, Dr. Ing.,**
**Brüder-Grimm-Strasse 13, D-6236 Eschborn (DE)**

(74) Vertreter: **Fischer, Ernst, Dr., Reuterweg 14,**
**D-6000 Frankfurt am Main 1 (DE)**

## Verfahren zum Behandeln von unter Druck stehendem Kondensat

Die Erfindung betrifft ein Verfahren zum Behandeln von wasserhaltigem Kondensat aus der Kühlung des Rohgases der Vergasung fester Brennstoffe mit Sauerstoff, Wasserdampf und/oder Kohlendioxid enthaltenden Vergasungsmitteln unter einem Druck von 5 bis 150 bar, wobei das Rohgas in mindestens einer Kühlstufe gekühlt wird, ein Teil des beim Kühlen anfallenden Kondensats, das eine Temperatur von mindestens 110° C aufweist und unter einem Druck von mindestens 2 bar steht, entspannt und der Entspannungsdampf abgeleitet wird, das entspannte Kondensat einer Trenneinrichtung zugeführt, aus der Trenneinrichtung eine weitgehend aus Wasser bestehende Kondensatphase abgezogen und als Kühlmedium für das Rohgas wiederverwendet wird.

Ein Verfahren dieser Art ist bereits in der DE-A-2607744 beschrieben. Bekannt ist auch die Vergasung fester Brennstoffe, insbesondere Kohle oder Braunkohle, mit Sauerstoff, Wasserdampf oder Kohlendioxid als Vergasungsmittel unter einem Druck von 10 bis 150 bar. Geeignete Verfahren, bei denen der Brennstoff ein Festbett bildet und die unverbrennlichen mineralischen Bestandteile des Brennstoffs als feste Asche unter dem Festbett abgezogen werden, sind z. B. in Ullmanns Enzyklopädie der technischen Chemie, 4. Auflage (1977), Band 14, Seiten 383 bis 386, dargestellt. Einzelheiten dieser bekannten Vergasungsmethode können den US-Patentschriften 3540867 und 3854895 entnommen werden. Bekannt ist auch die Vergasung des Brennstoffs im Festbett mit Abzug flüssiger Schlacke, wobei auf die britischen Patentschriften 1507905, 1506671 und 1512677 zu verweisen ist.

Das Rohgas aus den bekannten Festbett-Vergasungsverfahren fällt üblicherweise mit Temperaturen zwischen 300 und 900° C an. Es enthält erhebliche Mengen an Wasserdampf und daneben noch Schwelprodukte wie Teer, Phenole, Fettsäuren und Ammoniak. Bei der Abkühlung des Rohgases enthält das entstehende Kondensat diese Begleitstoffe, die in verschiedenen Verfahrensstufen entfernt werden müssen. Zu diesem Zweck unterzieht man das Kondensat nach Abscheiden von Teer und Öl einer Phenolextraktion, einer Ammoniakentfernung und anschliessend einer biologischen Aufbereitung.

Bei der ebenfalls bekannten Vergasung von Kohlenstaub ist ein Vergasungs-Festbett nicht vorhanden. Das dabei erzeugte Rohgas ist frei von Teer und Öl und fällt mit Temperaturen bis zu etwa 1400° C an. Bei der Kühlung dieses Rohgases wird ebenfalls wässriges Kondensat gebildet.

Aufgabe der Erfindung ist es, den Entspannungsdampf auf umweltfreundliche Weise zu beseitigen. Erfindungsgemäss wird dies beim eingangs genannten Verfahren dadurch erreicht, dass der Entspannungsdampf, der Phenole, Fettsäuren und Ammoniak enthält, bei Temperaturen oberhalb von 800° C verbrannt wird. Die Abgase der Verbrennung bestehen im wesentlichen nur noch aus $H_2O$, $CO_2$ und $N_2$ und sind nicht umweltschädlich. Der Anteil an $SO_2$ im Abgas liegt im allgemeinen unterhalb der zulässigen Werte. Bevor man die Verbrennungsgase in die Atmosphäre leitet, kann man ihre fühlbare Wärme noch zur Dampferzeugung nutzen.

Bei der Entspannung des Kondensats kühlt sich dieses ab. Erfolgt die Entspannung auf Atmosphärendruck, wird eine Entspannungsdampfmenge D frei, die sich aus der Wassermenge W vor der Entspannung und der Enthalpie I des Wassers vor der Entspannung wie folgt berechnen lässt:

$$D = W \cdot (I-100) / (639{,}1-100).$$

Bevorzugt wird das Rohgas durch mehrere Kühlstufen geleitet, wobei in mindestens einer der Kühlstufen eine indirekte Kühlung ohne zurückgeführtes Kondensat erfolgt. Über die in dieser indirekten Kühlung abgeführte Wärme kann die Menge des anfallenden Entspannungsdampfes eingestellt werden. Diese Einstellung kann so erfolgen, dass die Menge an gebildetem und abgeführtem Entspannungsdampf mit der Menge an neugebildetem Kondensat im Gleichgewicht steht.

Eine zweckmässige Ausführungsform besteht darin, dass man das in mehreren Kühlstufen anfallende Kondensat getrennt entspannt, entspanntes Kondensat getrennten Trenneinrichtungen zuführt, die Entspannungsdampfströme vereinigt und gemeinsam verbrennt und die weitgehend aus Wasser bestehenden Kondensatphasen gemeinsam als Kühlmittel in mindestens einer der das Rohgas indirekt kühlenden Kühlstufen verwendet. In diesem Fall muss das als Kühlmedium wiederzuverwendende Kondensat nicht bis auf den Druck der Vergasung bespannt werden, da es nicht mit dem Rohgas in Berührung kommt.

Die Entspannung des Kondensats kann in mehreren Stufen erfolgen. Den Entspannungsdampf kann man vor seiner Verbrennung über mindestens eine Gasturbine leiten, um Energie wiederzugewinnen.

Beispiele für Verfahrensführungen werden mit Hilfe der Zeichnung erläutert. Es zeigt:
Fig. 1 eine erste Verfahrensführung und
Fig. 2 eine zweite Verfahrensführung.

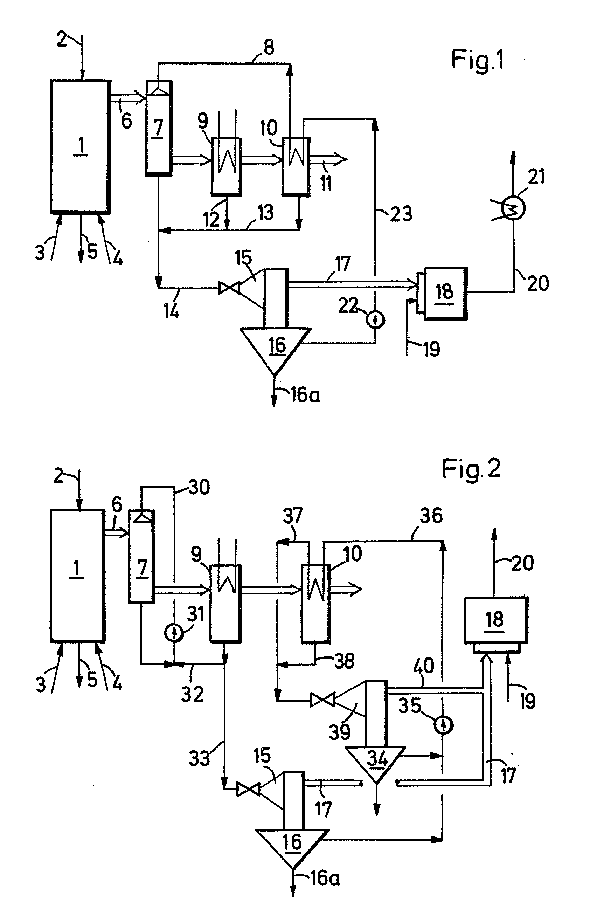

Bei dem in Fig. 1 schematisch dargestellten Verfahren wird dem Vergasungsreaktor 1 durch die Leitung 2 körnige Kohle einer Korngrösse von etwa 3 bis 60 mm aufgegeben. Durch die Leitungen 3 und 4 gibt man als Vergasungsmittel Sauerstoff und Wasserdampf in den Reaktor und zieht die unverbrennlichen Bestandteile durch die Leitung 5 ab. Im Vergasungsreaktor herrscht ein Druck von 5 bis 150 bar und der Brennstoff befindet sich dort vorzugsweise im Festbett. Das Rohgas verlässt den Reaktor durch die Leitung 6 und wird in einem Waschkühler 7 mit Kondensat aus der Leitung 8 besprüht. Dabei wird das Rohgas mit Wasserdampf gesättigt und auf Temperaturen von etwa 150 bis 220° C gekühlt. Dieses Rohgas strömt dann durch zwei weitere Kühlstufen in Form der Wärmeaustauscher 9 und 10, in denen es indirekt gekühlt wird. Das Rohgas, das noch Temperaturen von etwa 110 bis 130° C aufweist und vor allem aus Wasserstoff, Kohlenoxiden und Methan besteht, wird in der Leitung 11 der nicht dargestellten Weiterverarbeitung zugeführt.

In den Kühlstufen fällt jeweils Kondensat an, das in den Leitungen 12 und 13 gesammelt und zusammen mit dem Kondensat des Waschkühlers 7 in der Leitung 14 einer Entspannungseinrichtung 15 zugeführt wird. Das entspannte und abgekühlte Kondensat gelangt in den Teerscheider 16, in welchem die Flüssigkeiten durch Schwerkrafttrennung separiert werden. Am unteren Ende des Teerscheiders zieht man eine schwere, staub- und teerhaltige Phase bei 16a ab; sie kann ganz oder weitgehend in den Reaktor 1 zurückgeführt werden. Der Entspannungsdampf wird durch die Leitung 17 der Brennkammer 18 aufgegeben.

Zusatzbrennstoff enthält die Brennkammer durch die Leitung 19. Die Verbrennungsgase werden durch die Leitung 20 abgezogen, wobei fühlbare Wärme im Dampferzeuger 21 ausgenutzt wird.

Eine Kondensatphase, die weitgehend aus Wasser besteht, arm an Teer ist und praktisch keine Feststoffe enthält, wird aus dem Teerscheider 16 mit Hilfe der Pumpe 22 in der Leitung 23 zunächst zum Wärmeaustauscher 10 geführt. Danach strömt dieses Kondensat in der Leitung 8 zum Waschkühler 7. Aus dieser Führung des Kondensats ist ersichtlich, dass es durch die Pumpe 22 mindestens bis auf den Druck im Vergasungsreaktor 1 bespannt werden muss, der auch im Waschkühler 7 herrscht.

Die Verfahrensvariante der Fig. 2 ermöglicht es, das zur Kühlung wiederverwendete Kondensat aus der Teerscheidung auf einen niedrigeren Druck zu bespannen, als im Waschkühler 7 herrscht. Soweit das Schema der Fig. 2 mit dem der Fig. 1 übereinstimmt, sind gleiche Bezugsziffern verwendet und es gelten die bereits im Zusammenhang mit Fig. 1 gegebenen Erläuterungen.

Im Waschkühler 7 der Fig. 2 wird das Kondensat über die Leitung 30 und die Pumpe 31 im Kreislauf geführt. Ein Teil des im Wärmeaustauscher 9 anfallenden Kondensats wird durch die Leitung 32 diesem Kreislauf zugegeben. Der andere Teil des Kondensats gelangt durch die Leitung 33 zur Entspannungseinrichtung 15, abgekühltes Kondensat sammelt sich im Teerscheider 16 und Entspannungsdampf wird in der Leitung 17 abgezogen. Die schwere Phase verlässt den Teerscheider 16 durch die Leitung 16a.

Die weitgehend aus Wasser bestehende leichte Phase des Teerscheiders 16 wird zusammen mit der entsprechenden Phase eines weiteren Teerscheiders 34 als Kühlmittel wiederverwendet und zu diesem Zweck gemeinsam mit Hilfe der Pumpe 35 über die Leitung 36 zum Wärmeaustauscher 10 geführt. Erwärmtes Kühlmittel in der Leitung 37 wird mit neu gebildetem Kondensat aus der Leitung 38 vereinigt und einer Entspannungseinrichtung 39 aufgegeben. Entspanntes Kondensat fliesst in den Teerscheider 34 und der Entspannungsdampf strömt in der Leitung 40 zusammen mit dem Entspannungsdampf der Leitung 17 zur Brennkammer 18. Falls der Druck der Kühlflüssigkeit in der Leitung 36 niedriger ist als der Druck des Rohgases im Wärmeaustauscher 10, muss das Kondensat in der Leitung 38 über ein Entspannungsventil geleitet werden, das in der Zeichnung der besseren Übersichtlichkeit wegen weggelassen wurde.

Beispiel 1

In einer Verfahrensführung gemäss Fig. 1 wird Kohle einer Körnung von 3 bis 60 mm im Festbett vergast. Beim Einsatz von 1000 kg Kohle (wasser- und aschefrei gerechnet), die noch 94 kg Feuchtigkeit und 107 kg Asche enthält, werden als Vergasungsmittel 295 Nm³ Sauerstoff und 1350 kg Wasserdampf aufgewandt. Der Druck im Vergasungsreaktor 1 liegt bei 30 bar. Das Rohgas in der Leitung 6 hat eine Temperatur von 428° C und ein Volumen von insgesamt 2108 Nm³ (trocken gerechnet). Dieses Rohgas besteht aus

$CO_2$    31,7 Vol.%
$H_S$      0,5 Vol.%
$C_nH_m$    1,1 Vol.%
$CO$     17,2 Vol.%
$H_2$     37,7 Vol.%
$CH_4$    10,2 Vol.%
$N_2$      1,6 Vol.%

Ausserdem enthält das Rohgas noch 69 kg Teer, Öl und Naphtha sowie etwa 8 kg Phenole, 1,3 kg Fettsäuren und 11 kg Ammoniak sowie 1547 kg Wasserdampf.

Das Rohgas wird dem Waschkühler 7 zugeführt und dort intensiv mit Wasser aus der Leitung 8 besprüht. Das Gas verlässt den Waschkühler mit einer Temperatur von 186° C und ist dabei wasserdampfgesättigt. Im Wärmeaustauscher 9 wird ein Teil der fühlbaren Wärme des Gases zur Dampferzeugung ausgenutzt. Das Gas aus dem Wärmeaustauscher 9 hat eine Temperatur von 164° C und tritt dann in den Röhrenwärmeaustauscher 10 ein, der von umlaufendem Wasser (Leitungen 23 und 8) durchflossen ist. Das Gas verlässt den Prozess in der Leitung 11 mit einer Temperatur von 120° C.

Von der Pumpe 22 kommen 8000 kg im Kreislauf geführtes Wasser mit einem Druck von 31 bar und einer Temperatur von 100° C. Das Wasser strömt zunächst durch den Wärmeaustauscher 10 und hat dann in der Leitung 8 eine Temperatur von 141° C. Dieses Wasser wäscht im Waschkühler 7 das Rohgas und kühlt es gleichzeitig auf 186° C ab. In der Leitung 14 liegt ein Kondensatgemisch in einer Menge von 9421 kg und mit einer Temperatur von 182° C vor. Dieses Gemisch, das ausser $H_2O$ auch noch Teer, Staub, Phenole, Fettsäuren und Ammoniak enthält, wird auf 1 bar entspannt. Dabei entstehen 1420 kg Wasserdampf und dazu Phenol-, Fettsäure- und Ammoniakdämpfe. Dieses Dampfgemisch wird in der Leitung 17 zur Brennkammer 8 geleitet, wo unter Zufuhr von Brennstoff und Luft eine Verbrennungstemperatur von mindestens 850° C erzeugt wird. Die Verbrennungsgase werden zur Dampferzeugung durch einen konventionellen Kessel 21 geleitet.

In dem nach dem Schwerkraftprinzip arbeitenden Teerscheider 16 werden aus dem entspannten Kondensat Teer und Staub abgeschieden und das Gaswasser steht in der Leitung 23 wieder für den Kreislauf zur Verfügung.

Beispiel 2

Die Kohlevergasung des Beispiels 1 wird wiederholt und ansonsten mit einer Verfahrensführung gemäss Fig. 2 gearbeitet. Das Rohgas durchläuft in gleicher Weise wie im Beispiel 1 den Waschkühler 7 und die beiden Wärmeaustauscher 9 und 10. Der Waschkühler 7 wird nun aber durch im Kreislauf geführtes Wasser mit Hilfe der Waschkühlerpumpe 31 beaufschlagt. Das im Wärmeaustauscher 9 anfallende Kondensat wird zum grössten Teil dem Entspannungsgefäss 15 auf dem Teerscheider 16 zugeführt. Dort werden 957 kg Kondensat mit einer Temperatur von 170° C entspannt, wobei als Entspannungsdampf 123 kg Wasserdampf und dazu Phenol-, Ammoniak- und Fettsäuredämpfe anfallen. Teer und Staub werden aus dem Teerscheider durch die Leitung 16a abgeführt.

Der Wärmeaustauscher 10 wird mittels Kreislaufwasser gekühlt. Zunächst stehen aus dem Teerscheider 16 834 kg Wasser von 100° C zur Verfügung, weitere 12 702 kg Wasser kommen aus dem Teerscheider 34. Die Umwälzpumpe 35 pumpt insgesamt 13 536 kg Wasser auf einen Druck von etwa 5 bar. Dieses Wasser wird im Wärmeaustauscher 10 erwärmt. Nach Zufuhr von 464 kg Kondensat aus der Leitung 38 werden insgesamt 14 000 kg Wasser von 150° C vor Eintritt in den Teerscheider 34 auf 1 bar entspannt, wobei als Entspannungsdampf 1298 kg $H_0$ anfallen. Die Entspannungsdämpfe werden über die Leitungen 40 und 17 gemeinsam der Brennkammer 18 zugeführt.

**Patentansprüche**

1. Verfahren zum Behandeln von wasserhaltigem Kondensat aus der Kühlung des Rohgases der Vergasung fester Brennstoffe mit Sauerstoff, Wasserdampf und/oder Kohlendioxid enthaltenden Vergasungsmitteln unter einem Druck von 5 bis 150 bar, wobei das Rohgas in mindestens einer Kühlstufe gekühlt wird, ein Teil des beim Kühlen anfallenden Kondensats, das eine Temperatur von mindestens 110° C aufweist und unter einem Druck von mindestens 2 bar steht, entspannt und der Entspannungsdampf abgeleitet wird, das entspannte Kondensat einer Trenneinrichtung zugeführt, aus der Trenneinrichtung eine weitgehend aus Wasser bestehende Kondensatphase abgezogen und als Kühlmedium für das Rohgas wiederverwendet wird, dadurch gekennzeichnet, dass der Entspannungsdampf, der Phenole, Fettsäuren und Ammoniak enthält, bei Temperaturen oberhalb von 800° C verbrannt wird.

2. Verfahren nach Anspruch 1, dadurch gekennzeichnet, dass das Rohgas durch mehrere Kühlstufen geleitet wird, wobei in mindestens einer der Kühlstufen eine indirekte Kühlung ohne zurückgeführtes Kondensat erfolgt.

3. Verfahren nach Anspruch 1 oder 2, dadurch gekennzeichnet, dass man das in mehreren Kühlstufen anfallende Kondensat getrennt entspannt, entspanntes Kondensat getrennten Trenneinrichtungen zuführt, die Entspannungsdampfströme vereinigt und gemeinsam verbrennt und die weitgehend aus Wasser bestehenden Kondensatphasen gemeinsam als Kühlmittel in mindestens einer der das Rohgas indirekt kühlenden Kühlstufen verwendet.

4. Verfahren nach Anspruch 1 oder einem der folgenden, dadurch gekennzeichnet, dass die Entspannung des Kondensats in mehreren Stufen erfolgt.

5. Verfahren nach Anspruch 1 oder einem der folgenden, dadurch gekennzeichnet, dass der Entspannungsdampf vor seiner Verbrennung über mindestens eine Gasturbine geleitet wird.

**Claims**

1. A process of treating aqueous condensate which has been formed as a result of the cooling of raw gas produced by a gasification of solid fuels with gasifying agents which contain oxygen, water vapor and/or carbon dioxide under a pressure of 5 to 150 bars, which raw gas is cooled in at least one cooling stage, a part of the condensate which has formed as a result of the cooling and is at a temperature of at least 110° C and a pressure of at least 2 bars is pressure-relieved, the flashed-off vapor is removed, the pressure-relieved condensate is fed to a separator, and a condensate phase consisting mainly of water is withdrawn from the separator and used as a cooling fluid for the raw gas, characterized in that the flashed-off vapor, which contains phenols, fatty acids and ammonia, is burnt at temperatures exceeding 800° C.

2. A process according to claim 1, characterized in that the raw gas in passed through a plurality of cooling stages, at least one of which comprises an indirect cooling without use of recycled condensate.

3. A process according to claim 1 or 2, characterized in that the condensates which have become available in a plurality of cooling stages are separately pressure-relieved, pressure-relieved condensates are fed to separate separators, the flashed-off vapor streams are combined and jointly burnt, and the condensate phases consisting mainly of water are jointly used as coolant in at least one of the cooling stages in which the raw gas is cooled indirectly.

4. A process according to claim 1 or any of the following claims, characterized in that the condensate is pressure-relieved in a plurality of stages.

5. A process according to claim 1 or any of the following claims, characterized in that the flashed-off vapor is passed through at least one gas turbine before it is burnt.

## Revendications

1. Procédé de traitement d'un condensat contenant de l'eau et provenant du refroidissement du gaz brut de la gazéification de combustibles solides avec un agent de gazéification contenant de l'oxygène, de la vapeur d'eau et/ou du dioxyde de carbone sous une pression de 5 à 150 bars, dans lequel le gaz brut est refroidi dans au moins un étage de refroidissement, une partie du condensat ayant une température d'au moins 110° C et étant sous une pression d'au moins 2 bars obtenu lors du refroidissement étant détendu et la vapeur de détente étant évacuée, le condensat détendu étant amené dans un dispositif de séparation, une phase de condensat consistant principalement en eau étant soutirée du dispositif de séparation et réutilisée comme réfrigérant pour le gaz brut, caractérisé en ce que la vapeur de détente qui contient des phénols, des acides gras et de l'ammoniac est brûlée à des températures supérieures à 800° C.

2. Procédé suivant la revendication 1 caractérisé en ce que le gaz brut est mené à travers plusieurs étages de refroidissement, en effectuant, dans au moins un de ces étages, un refroidissement indirect sans recyclage du condensat.

3. Procédé suivant la revendication 1 ou 2 caractérisé en ce qu'on détend séparément le condensat obtenu dans plusieurs étages de refroidissement, en ce qu'on mène le condensat détendu dans des dispositifs de séparation distincts, en ce qu'on réunit et brûle simultanément les courants de vapeur de détente et en ce qu'on utilise les phases de condensat réunies, essentiellement composées d'eau, comme réfrigérant dans au moins un des étages où on refroidit indirectement le gas brut.

4. Procédé suivant la revendication 1 ou l'une des suivantes caractérisé en ce que la détente du condensat est effectuée en plusieurs étapes.

5. Procédé suivant la revendication 1 ou l'une des suivantes caractérisé en ce que la vapeur de détente est menée dans au moins une turbine à gaz avant sa combustion.

Fig.1

Fig.2